# EUROPÄISCHE PATENTSCHRIFT

(11) **EP 0 400 191 B1**
(45) Veröffentlichungstag und Bekanntmachung des Hinweises auf die Patenterteilung: **10.03.1993**
(21) Anmeldenummer: 89110023.2
(22) Anmeldetag: 02.06.1989
(51) Int. Cl.: B01L 11/00, A01G 7/00

(54) **Untersuchungsvorrichtung mit einer Kammer zur Aufnahme von vorzugsweise biologischen Untersuchungsmaterialien**
Analytical device with a chamber for receiving especially biological materials to be analysed
Dispositif d'analyse avec chambre de réception des matériaux, de préférence biologiques, à analyser

(43) Veröffentlichungstag der Anmeldung: 05.12.1990
(73) Patentinhaber: Erwin Kayser-Threde Gesellschaft mit beschränkter Haftung, D-81379 München (DE)
(72) Erfinder: Burfeindt, Jürgen, Dr., D-8000 München 40 (DE); Rank, Peter, D-8138 Andechs/Frieding (DE); Mayr, Walter, D-8123 Reissenberg (DE); Hoeken, Jürgen, D-8082 Grafrath (DE)
(74) Vertreter: Hoffmann, Klaus, Dr. rer. nat.

(56) Entgegenhaltungen:
- EP-A- 0 046 345
- US-A- 4 250 830
- Soviet Inventions Illustrated, Week Y20, GORY, P13, 77-E1535Y/20, Derwent Publications Limited, London, GB

## Beschreibung

Die Erfindung betrifft eine Untersuchungsvorrichtung mit einer Kammer zur Aufnahme von vorzugsweise biologischen Untersuchungsmaterialien und mit einer Vorrichtung zum Umfüllen von Flüssigkeit aus einem Vorratsbehälter in die Kammer innerhalb einer vorgegebenen Umfülldauer, wobei die Flüssigkeit mittels eines unter der Wirkung eines Federspeichers stehenden Kolbens aus dem Vorratsbehälter in die Kammer entleert wird und zwischen ihm und der Kammer Mittel zur Vergleichmäßigung der durch die Kennlinie des Federspeichers bestimmten zeitlichen Verlaufs der Einströmgeschwindigkeit in die Kammer vorgesehen sind.

Eine Untersuchungsvorrichtung dieser Gattung ist bereits vorgeschlagen worden. Dabei wurde zur Vergleichmäßigung der Einströmgeschwindigkeit der Flüssigkeit in die Kammer zwischen Vorratsbehälter und Kammer eine Drossel vorgesehen, die jedoch bei vertretbarem Aufwand für deren Ausgestaltung keine ausreichende Vergleichmäßigung erbrachte.

Der Erfindung liegt daher die Aufgabe zugrunde, bei einer Untersuchungsvorrichtung der eingangs genannten Art eine weitgehende Vergleichmäßigung der Einströmgeschwindigkeit mit verhältnismäßig geringem Aufwand zu erzielen. Darüber hinaus soll der Mechanismus für die Flutung der Kammern der Untersuchungsvorrichtung leicht justierbar sein.

Erfindungsgemäß wird diese Aufgabe mit den Merkmalen des kennzeichenden Teils des Patentanspruchs 1 gelöst.

Weiterbildungen der Erfindung ergeben sich aus den dem Patentanspruch 1 nachgeordneten Patentansprüchen.

Eine bevorzugte Ausführungsform der Erfindung wird nachfolgend anhand der beigefügten Zeichnungen näher beschrieben und erläutert. In den Zeichnungen zeigen
- Fig. 1: eine Untersuchungsvorrichtung mit vier Aufnahmekammern in der Ansicht von oben bei abgenommenem Abdeckteil,
- Fig. 2: den Gegenstand der Fig. 1 teils in der Seitenansicht, teils im Längsschnitt,
- Fig. 3: den Gegenstand der Fig. 1 im Querschnitt längs der Linie III-III,
- Fig. 4: eine Baugruppe des Gegenstandes der Fig. 1 mit einem Paar von Aufnahmekammern in perspektivischer, teilweise aufgebrochener Darstellung,
- Fig. 5: den Gegenstand der Fig. 4 in der Ansicht von oben,
- Fig. 6: den Gegenstand der Fig. 4 im Querschnitt durch ein Paar von Kammern längs der Linie VI-VI,
- Fig. 7: einen Querschnitt durch das andere Paar von Kammern von Fig. 1 und
- Fig. 8: eine schematische Darstellung der am Strömungsweg der Fixierflüssigkeit für eine der Aufnahmekammern angeordneten Baugruppen.

Wie in den Zeichnungen dargestellt ist, umfaßt die Untersuchungsvorrichtung ein Gehäuse, das aus einer rechteckigen Grundplatte 1 und einem quaderförmigen, unten offenen, mit der Grundplatte lösbar verschraubten Abdeckteil 2 besteht.

Auf der Grundplatte 1 sind unter dem Abdeckteil 2 insbesondere folgende Baugruppen befestigt: ein längliches Kammeraggregat mit zwei Kunststoffblöcken 3, 4, in welchen je ein Paar von nebeneinander angeordneten Aufnahmekammern 5, 6 und 7, 8 zur Aufnahme von Untersuchungsmaterialien vorhanden sind, vier paarweise übereinander angeordnete zylindrische Vorratsbehälter 9, 11 und 10, 12 zur Bevorratung von Fixierflüssigkeit, vier nahe den Eckkanten der Kunststoffblöcke 3, 4 angeordnete Druckminderer 13, 14, 15, 16 und vier Magnetventile 17, 18, 19, 20. Elemente dieser Baugruppen sind in der nachfolgend beschriebenen Weise jeweils gruppenweise miteinander verbunden. Die zur Verbindung dienenden Schlauchleitungen sind in den Zeichnungen nur schematisch in Form von strich-punkierten Linien dargestellt.

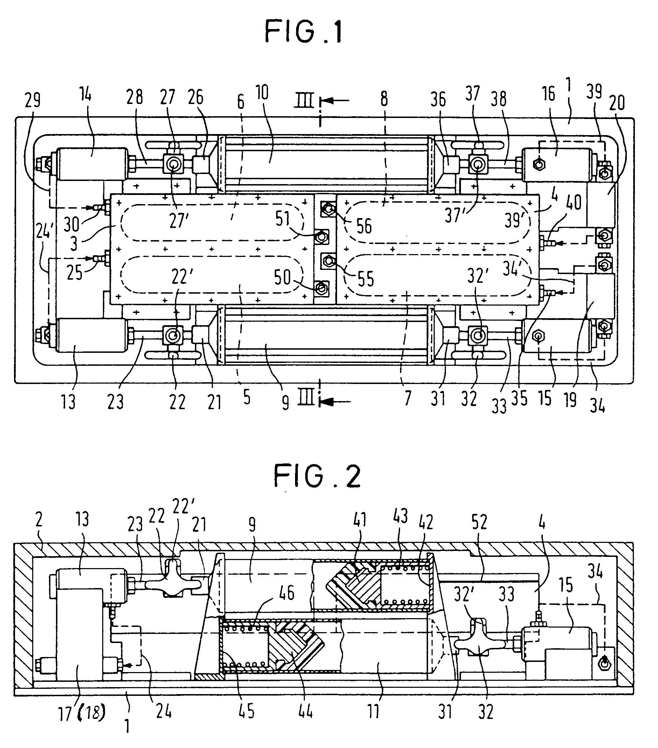

Der in Fig. 1 über dem Vorratsbehälter 11 angeordnete Vorratsbehälter 9 besitzt an seinem linksseitigen Ende einen Auslaßstutzen 21, der über einen Dreiwegehahn 22 an einen Einlaßstutzen 23 des Druckminderers 13 angeschlossen ist. Dieser steht auslaßseitig über eine Schlauchleitung 24 mit dem Einlaß des Magnetventils 17 in Verbindung. Dieses wiederum ist auslaßseitig über eine Schlauchleitung 24' mit einem Einlaßstutzen 25 der Aufnahmekammer 5 verbunden.

Desgleichen besitzt der in Fig. 1 über dem Vorratsbehälter 12 angeordnete Vorratsbehälter 10 an seinem linksseitigen Ende einen Auslaßstutzen 26, der über einen Dreiwegehahn 27 an einen Einlaßstutzen 28 des Druckminderers 14 angeschlossen ist. Dieser steht auslaßseitig mit dem Einlaß des Magnetventils 18 in Verbindung. Dieses wiederum ist auslaßseitig über eine Schlauchleitung 29 mit einem Einlaßstutzen 30 der Aufnahmekammer 6 verbunden.

Der in Fig. 1 unter dem Vorratsbehälter 9 angeordnete Vorratsbehälter 11 besitzt an seinem rechtsseitigen Ende einen Auslaßstutzen 31, der über einen Dreiwegehahn 32 an einen Einlaßstutzen 33 des Druckminderers 15 angeschlossen ist. Dieser steht auslaßseitig über eine Schlauchleitung 34 mit dem Einlaß des Magnetventils 19 in Verbindung. Dieses wiederum ist auslaßseitig über eine Schlauchleitung 34' mit einem Einlaßstutzen 35 der Aufnahmekammer 7 verbunden.

Desgleichen besitzt der in Fig. 1 unter dem Vorratsbehälter 10 angeordnete Vorratsbehälter 12 an seinem rechtsseitigen Ende einen Auslaßstutzen 36, der über einen Dreiwegehahn 37 an einen Einlaßstutzen 38 des Druckminderers 16 angeschlossen ist. Dieser steht auslaßseitig über eine Schlauchleitung 39 mit dem Einlaß des Magnetventils 20 in Verbindung. Dieses wiederum ist auslaßseitig über eine Schlauchleitung 39' mit einem Einlaßstutzen 40 der Aufnahmekammer 8 verbunden.

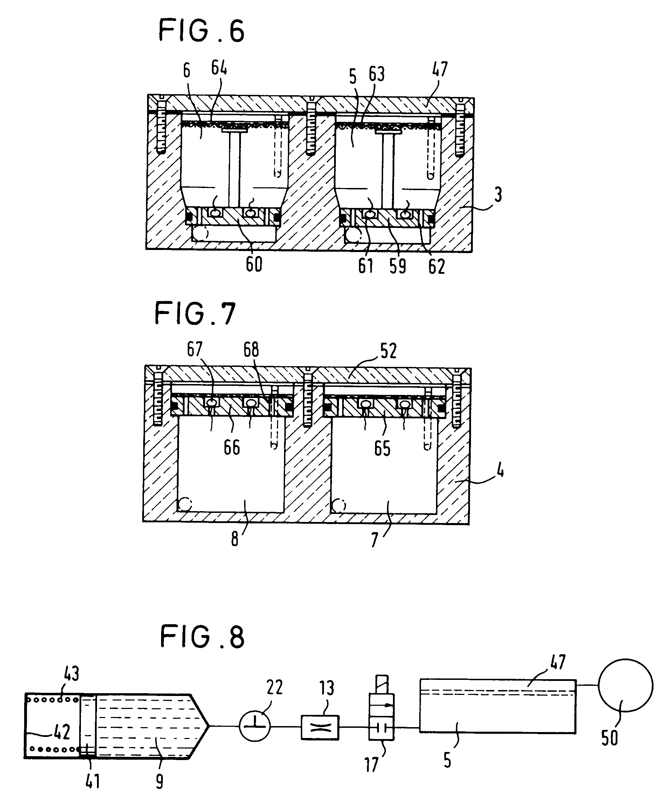

Der Mechanismus für die Flutung der Kammern 5, 6, 7, 8 ist am Beispiel des Flutungsmechanismus für die Kammer 5 in Fig. 8 auch noch schematisch dargestellt.

Nachfolgend werden die einzelnen Baugruppen der Untersuchungsvorrichtung näher beschrieben.

Wie Fig. 2 zeigt, enthält der an die Aufnahmekammer 5 angeschlossene Vorratsbehälter 9 einen axial beweglichen Druckkolben 41, der unter der Wirkung einer in Fig. 2 in ihrem gespannten Zustand dargestellten, rechtsseitig an einer inneren Stirnwand 42 des Vorratsbehälters 9 abgestützten, schraubenförmigen Druckfeder 43 steht. In gleicher Weise ist auch der an die Aufnahmekammer 6 angeschlossene Vorratsbehälter 10 mit einem in den Zeichnungen nicht dargestellten federbelasteten Druckkolben ausgestattet.

Wie Fig. 2 ferner zeigt, enthält auch der an die Aufnahmekammer 7 angeschlossene Vorratsbehälter 11 einen axial beweglichen Druckkolben 44, der unter der Wirkung einer in Fig. 2 in ihrem gespannten Zustand dargestellten, linksseitig an einer inneren Stirnwand 45 des Vorratsbehälters 11 abgestützten, schraubenförmigen Druckfeder 46 steht. In gleicher Weise ist auch der an die Aufnahmekammer 8 angeschlossene Vorratsbehälter 12 mit einem in den Zeichnungen nicht dargestellten federbelasteten Druckkolben ausgestattet.

Die an die Vorratsbehälter 9, 10, 11, 12 jeweils angeschlossenen Dreiwegehähne 22, 27, 32, 37 sind unter sich gleich ausgebildet und zwischen einer Stellung, in welcher sie den jeweiligen Vorratsbehälter mit dem zugehörigen Druckminderer verbinden, und einer weiteren Stellung umschaltbar, in welcher sie die jeweiligen Vorratsbehälter mit Füllstutzen 22', 27', 32', 37' verbinden, die in der Darstellung in Fig. 1 und 2 ins Freie münden.

Die an die Dreiwegehähne jeweils angeschlossenen Druckminderer 13, 14, 15, 16 sind unter sich gleich und von handelsüblicher Bauart. Sie sind dazu bestimmt, den eingangsseitig auftretenden, mit abnehmender Druckkraft der als Federspeicher dienenden Druckfedern 43, 46 sinkenden Flüssigkeitsdruck ausgangsseitig auf einen konstanten, einstellbaren Wert zu reduzieren. Dabei sind die Druckfedern der Flüssigkeitsbehälter 9, 10, 11, 12 und der konstante Ausgangsdruck der Druckminderer 13, 14, 15, 16 so aufeinander abgestimmt, daß der von den Druckfedern der Flüssigkeitsbehälter ausgehende Restdruck kurz vor Erreichen der Endstellung der Druckkolben bei größmöglichen Entspannung dieser Druckfedern am Ende ihres Federweges immer noch höher ist als der an den Druckminderern ausgangsseitig eingestellte konstante Wert.

Die an die Druckminderer jeweils angeschlossenen Magnetventile 17, 18, 19, 20 sind unter sich ebenfalls gleich und ebenfalls von handelsüblicher Bauart. Sie können durch Anlegen elektrischer Signale geöffnet und geschlossen werden.

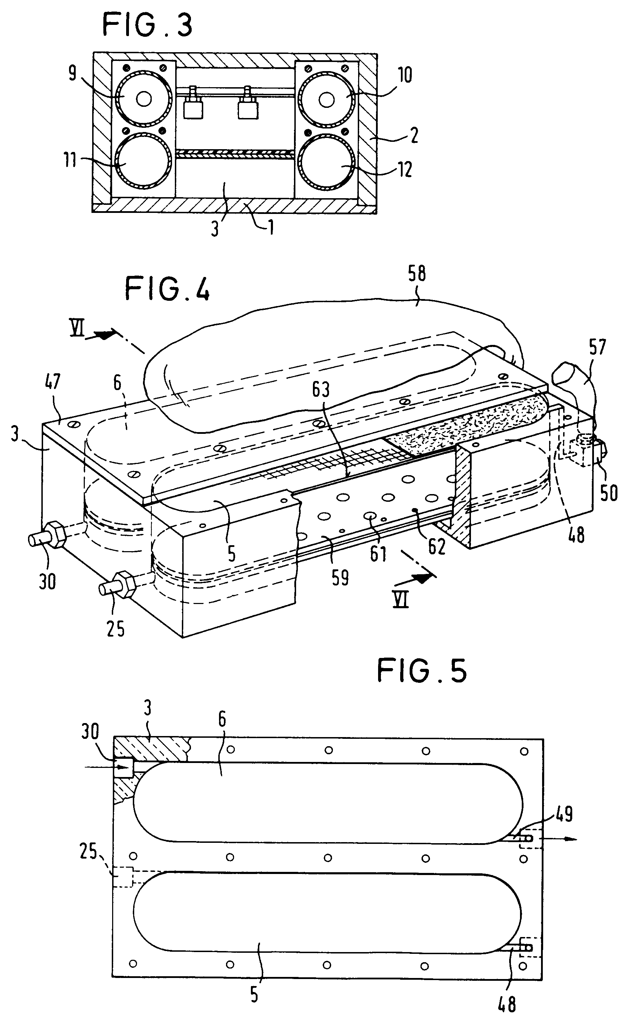

Wie vor allem Fig. 4 zeigt, sind die nebeneinanderliegenden Aufnahmekammern 5, 6 unter sich gleich und durch wannenförmige Ausnehmungen im Kunststoffblock 3 gebildet. Die senkrechten und waagrechten Innenkanten dieser wannenförmigen Ausnehmungen sind leicht konkav gerundet, wobei der Radius der Rundung klein ist im Vergleich zur Breite der Ausnehmungen und zu dieser Breite vorzugsweise im Verhältnis von etwa 1 : 50 steht. Beide Aufnahmekammern 5, 6 werden durch eine gemeinsame Deckplatte 47 abgedeckt, die in Fig. 4 nur teilweise dargestellt und mit dem Kunststoffblock 3 flüssigkeitsdicht, jedoch lösbar verschraubt ist.

Jede der Aufnahmekammern besitzt außer den nahe des jeweiligen Wannenbodens außerhalb der Längsmittelachse angeordnete Einlaßstutzen 25 bzw. 30 auch noch Auslaßstutzen 48, 49, die knapp unter der Deckplatte 47 liegen und in bezug auf die Einlaßstutzen 25, 30 zur Längsmittelachse jeweils diametral versetzt angeordnet sind, wie auch aus Fig. 5 hervorgeht. Die Auslaßstutzen 48, 49 sind zur Erhöhung ihres Strömungswiderstandes mit engem Querschnitt versehen und zweifach gekröpft. Sie enden jeweils in ein Anschlußteil 50, 51, wie insbesondere in Fig. 1 zu erkennen ist.

Die im Kunststoffblock 4 ausgebildeten und mittels einer Abdeckplatte 52 abgedeckten Aufnahmekammern 7, 8 entsprechen in ihrer Ausgestaltung sowie in der Anordnung und Ausbildung der Einlaßstutzen 35, 40 und Auslaßstutzen 53, 54 den Aufnahmekammern 5, 6 des Kunststoffblocks 3. Die Auslaßstutzen 53, 54 enden in Anschlußteilen 55, 56, die wie die Anschlußteile 50, 51 der Kammern 5, 6 zwischen den Kunststoffblöcken 3 und 4 liegen, wie Fig. 1 zeigt.

An diese Anschlußteile ist jeweils ein flexibler Auffangbehälter anschließbar, von denen in Fig. 4 der Auffangbehälter 57 der der Kammer 5 teilweise und der Auffangbehälter 58 der Kammer 6 ganz dargestellt sind.

Wie aus Fig. 4 und 6 zu entnehmen ist, enthalten die Kammern 5, 6 je einen nahe dem Wannenboden auswechselbar angeordneten Zwischenboden 59, 60. Diese sind mit Ausnehmungen 61 zur Aufnahme und Halterung von nach oben ragenden Sprossen der zu untersuchenden Kressepflanzen sowie mit Bohrungen 62 zum Durchtritt von Fixierflüssigkeit beim Fluten der Kammern 5, 6 versehen. Die Zwischenböden 59, 60 sind gegen die Seitenwände der Kammern 5, 6 abgedichtet, so daß die Fixierflüssigkeit während der Flutung der Kammern bei ansteigendem Pegel nur durch die Bohrungen 62 hindurchtreten kann. Die Bohrungen 62 sind über die Zwischenböden 59, 60 verteilt und zur Austrittsöffnung der Kammern hin vermehrt vorhanden.

Darüber hinaus ist in die Kammern 5, 6 nahe unter der Deckplatte 47 je ein weiterer gitterartiger Zwischenboden 63, 64 einsetzbar, auf den zur Erhöung der Luftfeuchtigkeit in den Kammern vor dem Fluten ein befeuchtetes Vlies aufgelegt werden kann.

Auch die Kammern 7, 8 enthalten im Bereich unterhalb der Deckplatte 52 je einen auswechselbaren Zwischenboden 65, 66, der Ausnehmungen 67 zur Halterung von nach unten hängenden Wurzeln der zu untersuchenden Kressepflanzen sowie Bohrungen 68 zum Durchtritt von Fixierflüssigkeit beim Fluten der Kammern 7, 8 aufweist. Auch die Ausnehmungen 61, 67 zur Halterung des Untersuchungsgutes tragen zusätzlich zum Flüssigkeitsdurchtritt durch die jeweiligen Zwischenböden bei.

Zur Untersuchung von Veränderungen von Zellstrukturen von Wurzeln oder Sprossen von Kressepflanzen unter Schwerelosigkeit kann die oben beschriebene Unersuchungsvorrichtung folgerdermaßen eingesetzt werden.

Zunächst wird von der Grundplatte 1 das Abdeckteil 2 gelöst und abgenommen.

Anschließend werden die Vorratsbehälter 9, 10, 11, 12 nacheinander mit Fixierlösung gefüllt. Dies geschieht dadurch, daß ein größeres, nicht zur Vorrichtung gehöriges und in den Zeichnungen nicht dargestelltes Vorratsgefäß, das Fixierflüssigkeit enthält, nacheinander an die Füllstutzen der Dreiwegehähne 22, 27, 32 und 37 angesetzt wird, wonach jedesmal der entsprechende Dreiwegehahn zunächst auf Verbindung zwischen Füllstutzen und zugeordnetem Druckminderer geschaltet und das nachgeschaltete Magnetventil geöffnet wird, so daß zuerst der Kanal zwischen Dreiwegehahn und Magnetventil mit Flüssigkeit aus dem angesetzten Vorratsgefäß vorgeflutet wird, damit die darin enthaltene Luft verdrängt und somit die Bildung von Luftblasen beim späteren Fluten der Kammern vermieden wird. Danach wird das jeweilige Magnetventil geschlossen und der Dreiwegehahn auf Verbindung zwischen Füllstutzen und zugeordnetem Vorratsbehälter geschaltet. Dann wird der Druckkolben 41 bzw. 44 dieses Vorratsbehälters mittels eines durch Öffnungen der abstützenden Stirnwand 42 bzw.45 einführbaren, nicht dargestellten Werkzeuges von der entspannten Stellung (Ruhestellung) unter Überwindung der Federkraft der jeweiligen Druckfeder 43 bzw. 46 in die gespannte Stellung (Bereitschaftsstellung) überführt wird. Dabei wird aus dem Vorratsgefäß Fixierflüssigkeit in den zylindrischen Innenraum des jeweiligen Vorratsbehälters 9, 10, 11, 12 eingesaugt. Danach wird der jeweilige Dreiwegehahn 22, 27, 32 bzw. 37 so umgestellt, daß der Füllstutzen gesperrt und eine durchgehende Verbindung zwischen dem jeweiligen Vorratsbehälter 9, 10, 11, 12 und dem zugeordneten Druckminderer 13, 14, 15, 16 hergestellt wird, worauf das Befüllen des jeweiligen Vorratsbehälters beendet ist und das Vorratsgefäß mit dem für die Füllung nicht verbrauchten Rest an Fixierflüssigkeit vom Füllstutzen des entsprechenden Dreiwegehahns entfernt wird.

Nach Entfernen des Werkzeugs zum Rückholen des Druckkolbens in die Bereitschaftsstellung verstellt sich dieser geringfügig in Richtung auf die entspannte Stellung, bis das Leitungssystem durch den Druckminderer bis zum geschlossenen Magnetventil mit Fixierflüssigkeit gefüllt ist. Die Fixierflüssigkeit im gesamten Leitungssystem bis zum Magnetventil steht dann unter dem Druck des federbelasteten Druckkolbens des jeweiligen Vorratsbehälters, wobei im Zweigabschnitt nach dem Druckminderer ein niedrigerer Anfangsdruck einstellbar ist.

Vor oder nach der aufeinanderfolgenden Befüllung aller vier Vorratsbehälter 9, 10, 11, 12 werden die Deckplatten 47, 52 der Kammerpaare 5, 6 und 7, 8 von den jeweiligen Kunststoffblöcken 3, 4 abgeschraubt und abgehoben, worauf die mit Versuchspflanzen bzw. Teilen dieser Pflanzen bestückten Zwischenböden 59, 60 bzw. 65, 66 in die Kammern 5, 6 und 7, 8 eingesetzt werden. Im vorliegenden Fall können die Zwischenböden 59, 60 der Kammern 5, 6 mit Sprossen von Kressepflanzen und die Zwischenböden 65, 66 mit Wurzeln dieser Pflanzen beschickt werden, wobei darauf geachtet wird, daß in die nebeneinanderliegenden Kammern 5, 6 und 7, 8 möglichst gleichartige Pflanzen bzw. Pflanzenteile in möglichst gleicher Wachstumsphase eingesetzt werden.

Danach werden diese Kammern durch Wiederaufschrauben der Deckplatten 47, 52 auf die Kunststoffblöcke 3, 4 flüssigkeitsdicht verschlossen. Schließlich wird auch das Abdeckteil 2 wieder auf die Grundplatte 1 aufgesetzt und mit ihr luftdicht verschraubt.

Die mit Untersuchungsmaterial beschickte Untersuchungsvorrichtung kann nunmehr als Nutzlast in eine zum zeitlich begrenzten Flug in den Weltraum vorgesehene, unbemannte Rakete eingesetzt werden, wobei die aus dem Gehäuse 1, 2 herausführenden, in den Zeichnungen nicht dargestellten elektrischen Anschlüsse der Magnetventile 17, 18, 19, 20 an die elektrische Steuereinrichtung der Rakete angeschlossen werden.

Nach dem Abschuß der Rakete werden im ersten Teil ihrer Flugbahn kurz nach Eintritt in die schwerelose Phase ihres Weltraumfluges die Magnetventile 17, 19 der beiden Kammern 5, 7 geflutet, wozu die Magnetventile 17, 19 über die elektrische Steuereinrichtung der Rakete elektrische Signale erhalten, die das Öffnen dieser Ventile bewirken.

Hierdurch kann der federbelastete Druckkolben des jeweils zugeordneten Vorratsbehälters 9, 11 die darin gespeicherte Fixierflüssigkeit in die Kammer 5 bzw. 7 pressen, wodurch sich diese Vorratsbehälter entleeren und die Kammern 5, 7 mit der Fixierflüssigkeit gefüllt werden, bis der Druckkolben des jeweiligen Vorratsbehälters die der entspannten Stellung entsprechende Totpunktlage erreicht. Dabei verläuft die Strömung der durch die Einlaßstutzen 25, 35 eintretenden Fixierflüssigkeit relativ gleichmäßig zunächst entlang des Randes des Wannenbodens und bei steigendem Flüssigkeitspegel entlang der Innenwände der Wanne. Der Flüssigkeitspegel in den Kammern steigt während des Flutungsvorganges gleichmäßig an, bis er die Unterseite der Deckplatten 47, 52 erreicht.

Da die Speichervolumen der Vorratsbehälter etwas größer ist als das Volumen der jeweiligen Kammern, verbleibt beim völligen Fluten der Kammern jeweils ein Überschuß an Fixierflüssigkeit, der aus dem Auslaßstutzen der jeweiligen Kammer austritt und von dem an das zugeordnete Anschlußteil angesetzten flexiblen Auffangbehälter aufgenommen wird.

Nach ca. 6 min wird vor Wiedereintritt in die stark verzögernde Atmosphäre der Erde über die elektrische Steuereinrichtung der Rakete ein Befehl zum Öffnen der Magnetventile 18, 20 erteilt, wozu diese ein entsprechendes elektrisches Signal erhalten. Dadurch wird nunmehr auch die in den Vorratsbehältern 10, 12 gespeicherte Fixierflüssigkeit in die jeweils zugeordneten Kammern 6, 8 entleert, bis auch diese vollkommen geflutet sind. Dabei spielt sich der Flutungsvorgang in gleicher Weise ab wie der oben beschriebene, zeitlich vorangegangene Vorgang des Flutens der Kammern 5, 7.

Obwohl bei jedem dieser Flutungsvorgänge die Druckkraft der Druckfeder des jeweiligen Vorratsbehälters 5, 7 bzw. 6, 8 während der Dauer des jeweiligen Flutungsvorganges abnimmt, wenn der Druckkolben von der die Spannstellung markierenden "oberen" Totpunktlage in die die entspannte Stellung markierenden "unteren" Totpunktlage bewegt wird, bleibt der Flüssigkeitsdruck am Einlaßstutzen der jeweiligen Kammer während der gesamten Zeitdauer des Flutungsvorganges aufgrund der Wirkung der zwischengeschalteten Druckminderer im wesentlichen konstant, so daß auch die Geschwindigkeit, mit der die Fixierflüssigkeit in die jeweilige Kammer durch deren Einlaßstutzen einströmt, während der gesamten Zeitdauer des Flutungsvorganges im wesentlichen konstant bleibt.

Aus diesem Grunde sowie auch aufgrund der durch die Geometrie der Kammern und der Anordnung ihrer Einlaßstutzen erreichten Führung der Flüssigkeitsströmung entlang der Kammerwände entstehen innerhalb der jeweiligen Kammer bei deren Flutung keine nennenswerten Turbulenzen, so daß die als Untersuchungsmaterial in die Kammern eingebrachten empfindlichen Pflanzenteile bei der Flutung schonend umspült und nicht aus ihrer Verankerung in den Zwischenböden beim Ansteigen des Flüssigkeitspegels in den Kammern fortgespült werden.

Aufrund der oben beschriebenen Maßnahmen bilden sich am Ende des Flutungsvorganges auch keine störenden Luftblasen in den Kammern unter den Deckplatten 47, 52. Hierzu trägt ferner bei, daß die Auslaßstutzen der Kammern gekröpft sind und dadurch einen größeren Strömungswiderstand aufweisen als die Einlaßstutzen.

Die praktische Erprobung der oben beschriebenen Untersuchungsvorrichtung hat ergeben, daß die Flutung der einzelnen Kammern trotz großer positiver oder negativer Beschleunigung der Vorrichtung während der Flutungsvorgänge störungsfrei und gleichmäßig innerhalb von ca. 15 sec nach Erteilung des Öffnungsbefehls an das jeweilige Magnetventil abläuft.

Die Druckminderer 13, 14, 15, 16 erbringen nicht nur den Vorteil, daß eine weitgehende Konstanz der Einströmgeschwindigkeit der Fixierflüssigkeit aus den Vorratsbehältern 9, 10, 11, 12 in die Kammern 5, 6, 7, 8 über die gesamte Dauer der Flutung erzielt wird. Darüber hinaus wird mit diesen Druckminderern auch noch der weitere Vorteil erzielt, daß die Einströmgeschwindigkeit an den Druckminderern innerhalb eines größeren Bereiches verhältnismäßig einfach auf den jeweils gewünschten Wert eingestellt werden kann. Die in die Vorratsbehälter eingesetzten Druckfedern können somit hinsichtlich ihrer Kennlinien in gewissem Umfang streuen, ohne daß dadurch die Einströmgeschwindigkeit nachteilig beeinflußt wird. Die Untersuchungsvorrichtung ist daher relativ einfach justierbar.

Im vorliegenden Fall dient die zur Flutung der Kammern verwendete Fixierflüssigkeit dazu, den bei Flutung herrschenden Zustand der in die Untersuchungskammern eingebrachten Pflanzen oder Pflanzenteile zu fixieren, so daß er sich nach der Flutung bei Änderung der Schwerkraft während des Weiterflugs der Rakete nicht mehr ändert. Dadurch können im vorbeschriebenen Anwendungsfall nach Rückkehr und Bergung der Rakete bzw. der die Nutzlast enthaltenden Kapsel der Zustand von Zellstrukturen der Untersuchungsmaterialien bei Schwerkrafteinwirkung (Material in den Kammern 5, 7) und der Zustand bei Schwerelosigkeit (Material in den Kammern 6, 8) miteinander verglichen werden.

Die erfindungsgemäße Untersuchungsvorrichtung eignet sich auch für andere Anwendungszwecke, bei denen eine Flutung von Aufnahmekammern für Untersuchungsmaterialien vorzugsweise automatisch oder ferngesteuert vorgenommen werden muß, eine manuelle Bedienung also ausscheidet. Die erfindungsgemäße Untersuchungsvorrichtung kann sowohl für die Untersuchung anderer Materialien verwendet werden, wozu auch andere Flüssigkeiten für die Flutung vorgesehen werden können, als auch für die Untersuchung in anderen Bereichen, z. B. in Labors.

## Patentansprüche

1. Untersuchungsvorrichtung mit einer Kammer (5, 6, 7, 8) zur Aufnahme von vorzugsweise biologischen Untersuchungsmaterialien und mit einer Vorrichtung zum Umfüllen von Flüssigkeit aus einem Vorratsbehälter (9, 10, 11, 12) in die Kammer innerhalb einer vorgegebenen Umfülldauer, wobei die Flüssigkeit mittels eines unter der Wirkung eines Federspeichers (43, 46) stehenden Kolbens (41, 44) aus dem Vorratsbehälter in die Kammer entleert wird und zwischen ihm und der Kammer Mittel zur Vergleichmäßigung der durch die Kennlinie des Federspeichers bestimmten zeitlichen Verlaufs der Einströmgeschwindigkeit in die Kammer vorgesehen sind, dadurch **gekennzeichnet,** daß diese Mittel als Druckminderer (13, 14, 15, 16) ausgebildet sind.

2. Vorrichtung nach Anspruch 1, dadurch **gekennzeichnet,** daß der Druckminderer (13, 14, 15, 16) zwischen dem Vorratsbehälter (9, 10, 11, 12) und einem vor der Kammer (5, 6, 7, 8) vorgesehenen Magnetventil (17, 18, 19, 20) angeordnet ist.

3. Vorrichtung nach einem der vorangehenden Ansprüche, dadurch **gekennzeichnet,** daß die Einführung der Flüssigkeit in die Kammer (5, 6, 7, 8) derart erfolgt, daß sie die Innenwände der Kammer entlangströmt.

4. Vorrichtung nach einem der vorangehenden Ansprüche, dadurch **gekennzeichnet,** daß die Kammer (5, 6, 7, 8) wannenförmig ist und deren Innenkanten einen Rundungsradius aufweisen, der klein ist im Vergleich zur Breite der Kammer.

5. Vorrichtung nach einem der vorangehenden Ansprüche, dadurch **gekennzeichnet,** daß die Innenkanten der Kammer (5, 6, 7, 8) einen Rundungsradius aufweisen, der zur Breite der Kammer etwa im Verhältnis 1 : 50 steht.

6. Vorrichtung nach einem der vorangehenden Ansprüche, dadurch **gekennzeichnet,** daß die Kammer (5, 6, 7, 8) einen Zwischenboden (59, 60, 65, 66) zur Aufnahme des Materials aufweist, der gegen die Seitenwände der Kammer abgedichtet ist und flüssigkeitsführende Öffnungen (61, 62, 67, 68) aufweist.

7. Vorrichtung nach einem der vorangehenden Ansprüche, dadurch **gekennzeichnet,** daß die Kammer (5, 6, 7, 8) an dem der Eintrittsöffnung (25, 30, 35, 40) für die Flüssigkeit entgegengesetzten Ende eine Austrittsöffnung (48, 49) aufweist.

8. Vorrichtung nach einem der vorangehenden Ansprüche, dadurch **gekennzeichnet,** daß die Öffnungen (62, 68) des Zwischenbodens (59, 60, 65, 66) nahe der Austrittsöffnung (48, 49) der Kammer (5, 6, 7, 8) angeordnet sind.

9. Vorrichtung nach einem der vorangehenden Ansprüche, dadurch **gekennzeichnet,** daß die Austrittsöffnung (48, 49) diametral zur Eintrittsöffnung (25, 30, 35, 40) angeordnet ist.

10. Vorrichtung nach einem der vorangehenden Ansprüche, dadurch **gekennzeichnet,** daß die Austrittsöffnung (48, 49) strömungsdrosselnd ausgebildet oder an eine strömungsdrosselnde Leitung angeschlossen ist.

11. Vorrichtung nach einem der vorangehenden Ansprüche, dadurch **gekennzeichnet,** daß an die Austrittsöffnung (48, 49) ein Auffangbehälter (57, 58) anschließbar ist.

12. Vorrichtung nach Anspruch 11, dadurch **gekennzeichnet,** daß der Auffangbehälter (57, 58) flexibel ist.

## Claims

1. Testing device with a chamber (5, 6, 7, 8) for holding preferably biological test materials and with a device for transferring liquid from a storage tank (9, 10, 11, 12) to the chamber within a given transfer time, wherein the liquid is emptied from the storage tank into the chamber by means of a piston (41, 44) which is under the influence of a spring means (43, 46) and between the piston and the chamber are provided means for levelling the progress of the rate of flow into the chamber as a function of time, which progress is determined by the characteristic of the spring means, characterised in that these means are constructed as pressure reducers (13, 14, 15, 16).

2. Device according to claim 1, characterised in that the pressure reducer (13, 14, 15, 16) is arranged between the storage tank (9, 10, 11, 12) and a solenoid valve (17, 18, 19, 20) provided in front of the chamber (5, 6, 7, 8).

3. Device according to any of the preceding claims, characterised in that introduction of the fluid into the chamber (5, 6, 7, 8) takes place in such a way that it flows along the inner walls of the chamber.

4. Device according to any of the preceding claims, characterised in that the chamber (5, 6, 7, 8) is trough-shaped and the inner edges thereof have a radius of curvature which is small compared with the width of the chamber.

5. Device according to any of the preceding claims, characterised in that the inner edges of the chamber (5, 6, 7, 8) have a radius of curvature which is approximately in a ratio of 1:50 to the width of the chamber.

6. Device according to any of the preceding claims, characterised in that the chamber (5, 6, 7, 8) comprises an intermediate bottom (59, 60, 65, 66) for holding the material, which is sealed off from the side walls of the chamber and comprises fluid-conducting openings (61, 62, 67, 68).

7. Device according to any of the preceding claims, characterised in that the chamber (5, 6, 7, 8) comprises an outlet opening (48, 49) at the end opposite the inlet opening (25, 30, 35, 40) for the fluid.

8. Device according to any of the preceding claims, characterised in that the openings (62, 68) of the intermediate bottom (59, 60, 65, 66) are arranged close to the outlet opening (48, 49) of the chamber (5, 6, 7, 8).

9. Device according to any of the preceding claims, characterised in that the outlet opening (48, 49) is arranged diametrically to the inlet opening (25, 30, 35, 40).

10. Device according to any of the preceding claims, characterised in that the outlet opening (48, 49) has a flow-throttling construction or is connected to a flow-throttling pipe.

11. Device according to any of the preceding claims, characterised in that a collecting receptacle (57, 58) can be connected to the outlet opening (48, 49).

12. Device according to claim 11, characterised in that the collecting receptacle (57, 58) is flexible.

## Revendications

1. Dispositif d'analyse avec une chambre (5,6,7,8) pour la réception des matériaux, de préférence biologiques, à analyser et avec un dispositif de transvasement de liquide, depuis un réservoir de stockage (9,10,11,12), dans la chambre, dans les limites d'une durée de transvasement prédéterminée, le liquide étant évacué du réservoir de stockage dans la chambre, au moyen d'un piston (41,44) soumis à l'action d'un accumulateur élastique (43,46), et entre le réservoir de stockage et la chambre étant prévus des moyens, destinés à uniformiser l'évolution temporelle, déterminée par la caractéristique de l'accumulateur élastique, de la vitesse d'entrée, caractérisé en ce que ces moyens sont réalisés sous forme de détendeurs à pression (13,14,15,16).

2. Dispositif selon la revendication 1, caractérisé en ce que le détendeur à pression (13,14,15,16) est disposé entre le réservoir de stockage (9,10,11,12) et une électrovanne (17,18,19,20) prévue en amont de la chambre (5,6,7,8).

3. Dispositif selon l'une des revendications précédentes, caractérisé en ce que l'introduction du liquide dans la chambre (5,6,7,8) s'effectue de telle façon qu'il s'écoule le long des parois intérieures de la chambre.

4. Dispositif selon l'une des revendications précédentes, caractérisé en ce que la chambre (5,6,7,8) est en forme d'auge et ses arêtes intérieures présentent un rayon d'arrondissage de faible valeur en comparaison de la largeur de la chambre.

5. Dispositif selon l'une des revendications précédentes, caractérisé en ce que les arêtes intérieures de la chambre (5,6,7,8) présentent du rayon d'arrondissage situé dans un rapport d'à peu près 1:50 avec la largeur de la chambre.

6. Dispositif selon l'une des revendications précédentes, caractérisé en ce que la chambre (5,6,7,8) présente, pour recevoir le matériau, un fond intermédiaire (59,60,65,66), isolé de façon étanche par rapport aux parois latérales de la chambre et présentant des ouvertures (31,62,67,68) conduisant le liquide.

7. Dispositif selon l'une des revendications précédentes, caractérisé en ce qu'à l'extrémité opposée à l'ouverture d'entrée (25,30,35,40) pour le liquide, la chambre (5,6,7,8) présente une ouverture de sortie (48,49).

8. Dispositif selon l'une des revendications précédentes, caractérisé en ce que les ouvertures (62,68) du fond intermédiaire (59,60,65,66) sont disposées près de l'ouverture de sortie (48,49) de la chambre (5,6,7,8).

9. Dispositif selon l'une des revendications précédentes, caractérisé en ce que l'ouverture de sortie (48,49) est disposée diamétralement par rapport à l'ouverture d'entrée (25,30,35,40).

10. Dispositif selon l'une des revendications précédentes, caractérisé en ce que l'ouverture de sortie (48,49) est réalisé pour étrangler l'écoulement ou est raccordée à une conduite produisant un étranglement de l'écoulement.

11. Dispositif selon l'une des revendications précédentes, caractérisé en ce qu'un réservoir de captage (57,58) est susceptible d'être raccordé à l'ouverture de sortie (48,49).

12. Dispositif selon la revendication 11, caractérisé en ce que le réservoir de captage (57,58) est flexible.
